# EUROPÄISCHE PATENTSCHRIFT

(11) **EP 2 484 607 B1**
(45) Veröffentlichungstag und Bekanntmachung des Hinweises auf die Patenterteilung: **24.06.2015**
(21) Anmeldenummer: 12000635.8
(22) Anmeldetag: 01.02.2012
(51) Int. Cl.: B65G 1/04

(54) **Tragbahnförderer und Förderanlage mit einem solchen**
Conveyor and conveying equipment with such conveyor
Dispositif de transport et installation de transport équipée de ce dispositif

(30) Priorität: 07.02.2011 DE 102011010544
(43) Veröffentlichungstag der Anmeldung: 08.08.2012
(73) Patentinhaber: Eisenmann AG, 71032 Böblingen (DE)
(72) Erfinder: Gawelczyk, Klaus, 70372 Stuttgart (DE); Wäder, Martin, 71093 Weil im Schönbuch (DE)
(74) Vertreter: Heinrich, Hanjo

(56) Entgegenhaltungen:
- EP-A1- 1 081 065
- WO-A2-2004/035365
- WO-A2-2006/105446
- US-A1- 2011 008 138
- Breumer Group: "BEUMER autover® Gepäcktransportsystem (video)", , 4. Februar 2011 (2011-02-04), XP007920641, Gefunden im Internet: URL:http://www.youtube.com/watch?v=9VUxCeD Qf0w [gefunden am 2012-05-16]

## Beschreibung

Die Erfindung betrifft einen Tragbahnförderer zum Fördern von Fördergut nach dem Oberbegriff des Anspruchs 1.

Außerdem betrifft die Erfindung eine Förderanlage zum Fördern von Fördergut, welche einen Tragbahnförderer und wenigstens ein weiteres Fördersystem umfasst.

Häufig werden Tragbahnförderer der eingangs genannten Art in Förderanlagen eingesetzt, die neben dem Tragbahnförderer weitere Fördersysteme umfassen, die nach einem vom Tragbahnförderer abweichenden Prinzip arbeiten. So können z.B. neben dem Tragbahnförderer Rollenbahnförderer, Tragkettenförderer bzw. vergleichbare Förderer, die mit Endlos-Antriebsmitteln arbeiten, oder dergleichen in der Förderanlage vorhanden sein.

Um das Fördergut, mithin z.B. beladene oder gegebenenfalls auch unbeladene Paletten, somit mittels mehrerer bauartbedingt eigenständiger Fördersysteme durch die gesamte Förderanlage zu bewegen, muss das Fördergut auf seinem Weg durch die Förderanlage zu gegebener Zeit von dem Tragbahnförderer an ein Fördersystem einer anderen Bauart übergeben werden.

Bei vom Markt her bekannten Tragbahnförderern der eingangs genannten Art ist dazu auf der Rahmenstruktur eine separate Fördereinrichtung bzw. Übergabeeinheit, z.B. ein Rollenbahnförderer-Modul, ein Tragkettenförderer-Modul bzw. vergleiche Förder-Module oder auch beispielsweise eine Teleskopeinheit aufgebaut, die das Fördergut während des Transport durch den Tragbahnförderer aufnimmt. Ein solcher Aufbau zieht jedoch eine bezogen auf das Bodenniveau verhältnismäßig hohe Konstruktion und ein entsprechend hohes Transportniveau für das Fördergut nach sich.

Bei bodengebundenen Fördersystemen sind im Allgemeinen jedoch möglichst geringe Bauhöhen realisiert, um materialaufwendige und damit kostenintensive Stützaufbauten zu vermeiden. Dies führt dazu, dass die weiteren Fördersysteme das Fördergut häufig auf einem niedrigeren Höhenniveau transportieren, als es bei Tragbahnförderern der eingangs genannten Art der Fall ist.

Entweder müssen also angepasste Übergabevorrichtungen konzipiert werden, die das Fördergut vom Tragbahnförderer an ein anderes Fördersystem übergeben. Dies führt jedoch zu einem geringeren Durchsatz der Förderanlage, da der erhöhte Aufwand beim Fördern des Förderguts zu einem Zeitverlust führt. Zudem erhöhen eigene Übergabevorrichtungen sowohl die Installations- als auch die Betriebskosten für die Anlage.

Oder alle miteinander arbeitenden Fördersysteme einer Förderanlage müssen so aneinander angepasst sein, dass das Fördergut von allen unterschiedlichen Fördersystemen auf dem gleichen Höhenniveau gefördert wird. Dies bedeutet jedoch beim Einsatz von den vom Markt her bekannten Tragbahnförderern, dass die übrigen Fördersysteme gleichsam "aufgebockt" werden müssen, was ebenfalls die Kosten in die Höhe treibt.

Es ist daher Aufgabe der Erfindung, einen Tragbahnförderer sowie eine Förderanlage der jeweils eingangs genannten Art zu schaffen, die diesen Gedanken Rechnung tragen.

Diese Aufgabe wird durch einen Tragbahnförderer mit den Merkmalen des Anspruchs 1 gelöst.

Erfindungsgemäß bildet somit die Rahmenstruktur des Fahrwerks zugleich eine Fördereinrichtung, die als Übergabeeinheit für das Fördergut an ein anderes Fördersystem verwendet werden kann. Die Fördertechnik ist somit in die Rahmenstruktur und damit in das Fahrwerk des Transportwagens integriert. Anders ausgedrückt wird eine Fördereinrichtung als Komponente des Fahrwerks des Transportwagens verbaut. Da dadurch auf einen separaten Aufbau einer Fördereinrichtung bzw. Übergabeeinheit auf die Rahmenstruktur verzichtet werden kann, kann das Transportniveau des Förderguts tiefer liegen, als es bei einem solchen separaten Aufbau der Fall ist.

Wenn die Fördereinrichtung nach einer anderen Art ausgebildet ist, als der Tragbahnförderer, kann dieser besonders effizient in Förderanlagen der eingangs genannten Art eingesetzt werden.

Es hat sich als günstig und besonders gut handhabbar erwiesen, wenn die Fördereinrichtung nach Art eines Rollenbahnförderers oder eines Tragkettenförderers ausgebildet ist.

Im Hinblick auf gängige Transporthöhen für Fördergut bei etablierten Fördertechniken ist es besonders von Vorteil, wenn die Rahmenstruktur derart ausgebildet ist, dass die Transporthöhe für das Fördergut bezogen auf das Niveau des Bodens zwischen 250 mm und 1000 mm, bevorzugt zwischen 400 mm und 750 mm, nochmals bevorzugt zwischen 550 mm und 650 mm und besonders bevorzugt bei 550 mm angesiedelt ist. Insbesondere bei einer Transporthöhe von 550 mm arbeiten viele vom Markt her bekannte Rollenbahnförderer. Die resultierende Transporthöhe ist dabei insbesondere von der Bauart der Transportschiene abhängig; deren Bauhöhe begrenzt die minimal zu erreichende Transporthöhe.

Für eine einfache Übergabe des Förderguts vom Transportwagen zu einem anderen Fördersystem ist es vorteilhaft, wenn der Winkel, in welchem Fördergut zur Transportrichtung gegenüber dem Fahrwerk des Transportwagens bewegbar ist, bis zu 90° beträgt.

Dabei ist es günstig, wenn der Winkel, in welchem Fördergut zur Transportrichtung gegenüber dem Fahrwerk des Transportwagens bewegbar ist, 30° oder 45° oder 60° oder 90° beträgt. Besonders bevorzugt ist dabei ein Winkel von 90°, so dass das Fördergut senkrecht zur Transportrichtung des Tragbahnförderers an ein anderes Fördersystem abgegeben werden kann.

Nachfolgend wird ein Ausführungsbeispiel der Erfindung anhand der Zeichnungen näher erläutert. In diesen zeigen:
- Figur 1: eine perspektivische Ansicht eines Ausschnitts ei- nes Tiefbahnförderers mit einer Tragschiene eines Schienensystems, auf dem ein Transportwagen abläuft;
- Figur 2: eine Seitenansicht des Ausschnitts der Förderanlage nach Figur 1;

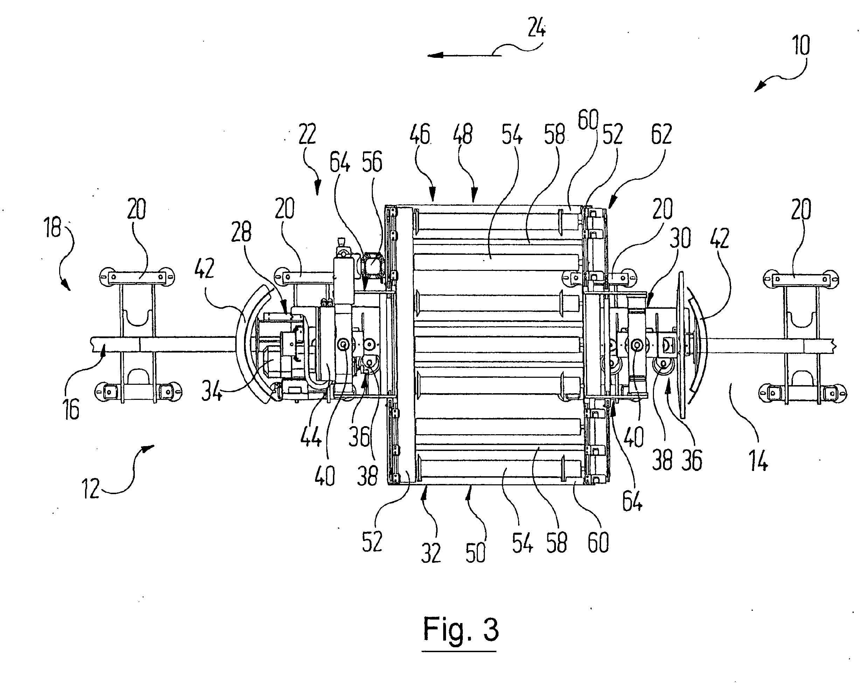

- Figur 3: eine Ansicht von oben auf den Ausschnitt der Förderanlage nach Figur 1;
- Figur 4: einen Schnitt entlang der Schnittlinie IV-IV in Figur 2;
- Figur 5: einen Schnitt entlang der Schnittlinie V-V in Figur 2.

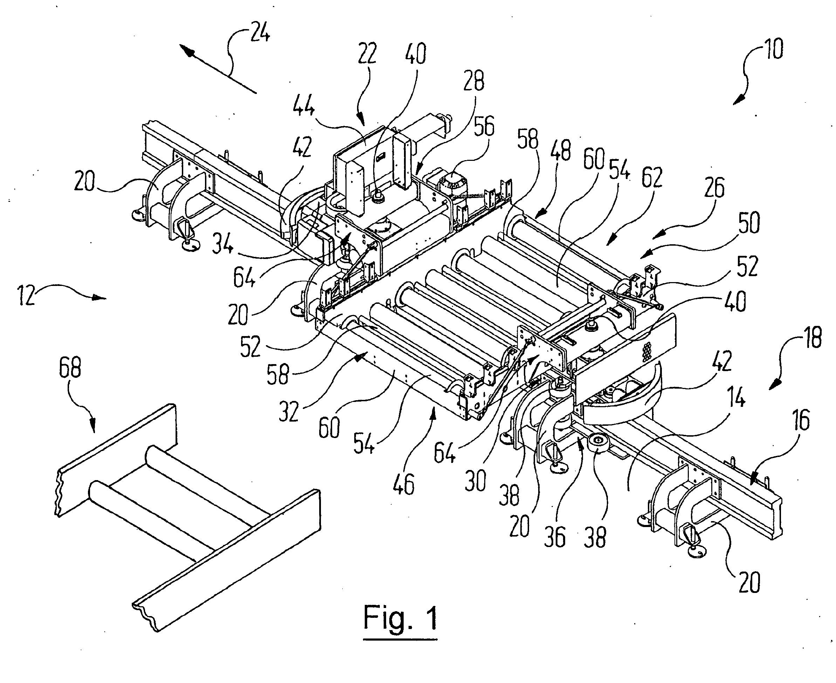

In Figur 1 ist mit 10 insgesamt eine Förderanlage zum Fördern von Fördergut bezeichnet, welches beispielsweise in Form von beladenen Paletten vorliegt, wie sie an und für sich bekannt sind. Es ist ein Ausschnitt eines von der Förderanlage 10 umfassten Tragbahnförderers 12 gezeigt, bei dem am Boden 14 verlaufende Tragschienen 16 ein Schienensystem 18 bilden. Die Tragschienen 16 sind über Tragbügel 20 am Boden 14 befestigt und haben ein im Querschnitt I-förmiges Profil.

In den Figuren ist einer von mehreren Transportwagen 22 des Tragbahnförderers 12 gezeigt, die auf den Tragschienen 16 in einer Transportrichtung 24 verfahren werden können. Der Transportwagen 22 umfasst ein Fahrwerk 26, das seinerseits eine in Transportrichtung 24 vorauseilende Fahreinheit 28, in der Fachsprache "Vorläufer" genannt, sowie eine in Transportrichtung 24 nacheilende weitere Fahreinheit 30 aufweist, welche in der Fachsprache "Nachläufer" genannt wird, die jeweils die Tragschiene 16 umgreifen.

Das Fahrwerk 26 des Transportwagens 22 umfasst außerdem eine Rahmenstruktur 32, welche den Vorläufer 28 mit dem Nachläufer 30 verbindet. Auf diese Rahmenstruktur 32 wird weiter unten nochmals detaillierter eingegangen.

Der Vorläufer 28 und der Nachläufer 30 des Transportwagens 22 sind in an und für sich bekannter Weise mit Führungs- und Tragrollen ausgestattet, die hier nicht alle mit einem Bezugszeichen versehen sind und an verschiedenen Flächen des I-Profils der Tragschiene 16 abrollen. Dabei laufen die Tragrollen auf der Oberseite der Tragschiene 16 ab. Mindestens eine der Rollen des Vorläufers 28 dient als Antriebsrolle und ist hierzu durch einen Elektromotor 34 antreibbar, der von dem Vorläufer 28 mitgeführt wird. Gegebenenfalls kann auch der Nachläufer 30 eine Antriebsrolle aufweisen, die durch einen Elektromotor angetrieben werden kann.

Der Transportwagen 22 ist kurvengängig. Hierzu umfassen der Vorläufer 28 und der Nachläufer 30 je eine Anordnung 36 von Seitenführungsrollen 38, die an vertikalen Flanken der Tragschiene 16 ablaufen und von denen in den Figuren nur einige mit Bezugszeichen versehen sind. Jedes Ensemble 34 ist als Einheit um eine vertikale Drehachse 40 gegenüber der Rahmenstruktur 32 verdrehbar gelagert, wodurch der Transportwagen 22 dem gekrümmten Verlauf der Tragschiene 16 in einer Kurve folgen kann. Die Transportrichtung 24 sei beim Transportwagen 22 sowohl beim Geradeauslauf als auch bei einer Kurvenfahrt stets parallel zu einer horizontalen Geraden, welche die beiden Drehachsen 40 der Rollen-Ensembles 34 schneidet.

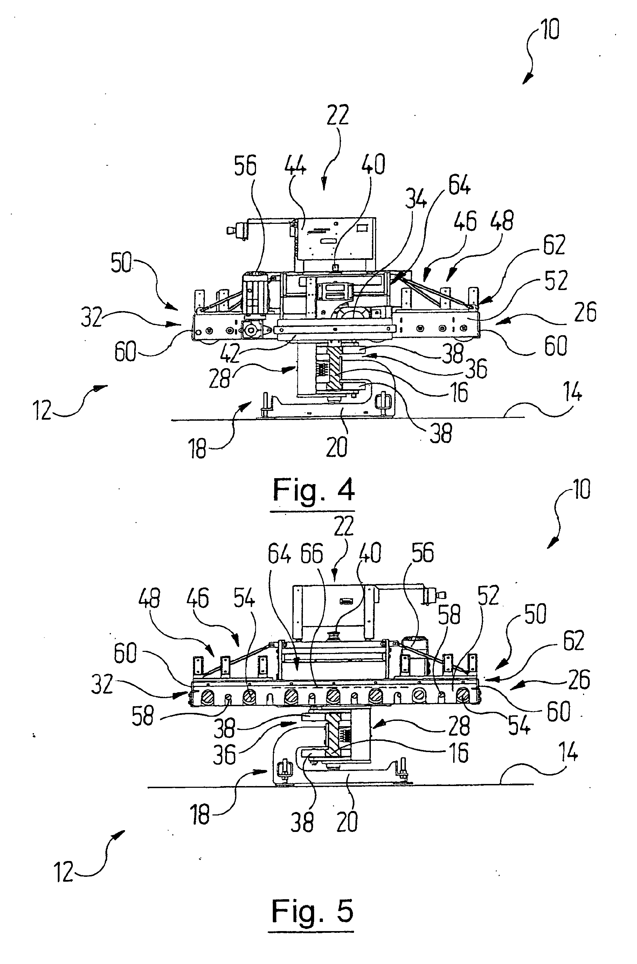

Der Transportwagen 22 ist in an und für sich bekannter Weise am Vorläufer 28 und am Nachläufer 30 mit einer jeweils mit 42 bezeichneten Sensoreinheit ausgestattet, die es unter anderem erlaubt, die Position des Transportwagens 22 auf dem Schienensystem 18 sowie den Abstand zu einem vorausfahrenden oder zu einem hinterherfahrenden weiteren Transportwagen zu erfassen. Die Sensoreinheiten 42 arbeiten mit einer vom Vorläufer 28 getragenen Steuereinheit 44 zusammen, die einerseits den Elektromotor 34 ansteuert und darüber hinaus in ebenfalls bekannter Weise mit einer nicht eigens gezeigten Zentralsteuerung kommuniziert, über welche der Fördervorgang mit Blick auf alle vorhandenen Transportwagen 22 insgesamt koordiniert und gesteuert wird. Die Kommunikation des Transportwagens 22 und auch dessen Energieversorgung erfolgt in an und für sich bekannter Weise über Schleifleitungen, die entlang der Tragschiene 16 verlaufen und in den Figuren 4 und 5 zu erkennen sind, jedoch nicht eigens mit einem Bezugszeichen versehen sind.

Die oben erwähnte Rahmenstruktur 32, welche den Vorläufer 28 mit dem Nachläufer 30 verbindet, bildet eine Trageinrichtung 46 für das Fördergut und ist insgesamt als Fördereinrichtung 48 ausgebildet, durch welche Fördergut in einem Winkel zur Transportrichtung 24 gegenüber dem Fahrwerk 26 des Transportwagens 22 bewegbar ist. Somit ist eine Fördertechnik in die Rahmenstruktur 32 integriert.

Beim vorliegenden Ausführungsbeispiel ist die Fördereinrichtung 48 nach einer anderen Art ausgebildet, als der Tragbahnförderer 12. Beim vorliegenden Ausführungsbeispiel ist die Fördereinrichtung 48 nach Art eines Rollenbahnförderers ausgebildet und weist ein Rollenbahnförderer-Modul 50 auf. Hierzu umfasst die Rahmenstruktur 32 zwei parallele und senkrecht zur Transportrichtung 24 verlaufende Seitenwangen 52, die in einer gemeinsamen horizontalen Ebene angeordnet sind. Die Seitenwangen 52 lagern in an und für sich bekannter Weise die gegenüberliegenden Enden von drehbaren Förderrollen 54, die ihrerseits parallel zur Transportrichtung 24 und nebeneinander in ebenfalls einer gemeinsamen horizontalen Ebene verlaufen.

Beim vorliegenden Ausführungsbeispiel sind sieben solcher Förderrollen 54 vorhanden, von denen der Übersichtlichkeit halber nur zwei mit einem Bezugszeichen versehen sind. Diese Förderrollen 54 können mittels eines Elektromotors 56 synchronisiert angetrieben werden, wobei der Elektromotor 56 von der Rahmenstruktur 32 mitgeführt wird. Der Elektromotor 56 wird ebenfalls über die Steuereinheit 44 des Vorläufers 28 angesteuert. Bei einer Abwandlung können auch nur einige der Förderrollen 54 angetrieben sein. In diesem Fall laufen die übrigen Förderrollen 54 ohne eigenen Antrieb mit.

Um die Rahmenstruktur 32 in ihrer Eigenschaft als Trageinrichtung 46 und Fördereinrichtung 48 für das Fördergut zu stabilisieren, sind die Seitenwangen 52 durch Verbindungsstreben 58, die zwischen den Förderrollen 54 verlaufen und von denen nur zwei ein Bezugszeichen tragen, und zwei außen liegende Verbindungsleisten 60, die zugleich als Sichtblenden dienen, starr und weitgehend verwindungsfrei miteinander verbunden. Auf diese Weise ist eine Rollenbahn 62 ausgebildet.

Diese Rollenbahn 62 ist über L-förmige Bügeleinheiten 64 der Rahmenstruktur 32, von denen jeweils eine an den Seitenwangen 52 befestigt ist, mit jeweils dem Vorläufer 28 bzw. dem Nachläufer 30 gekoppelt, Dabei gibt jede Bügeleinheit 64 die zugehörige Drehachse 40 für die Rollen-Anordnung 36 des Vorläufers 28 bzw. des Nachläufers 30 vor.

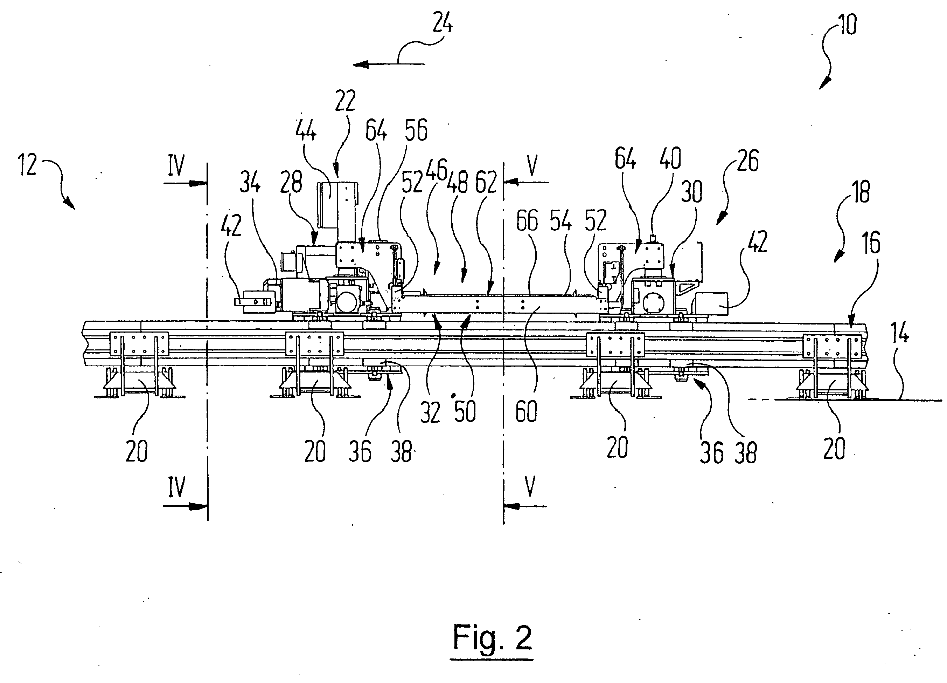

Durch die Bügeleinheiten 64 erfolgt die Kopplung des Rollenbahnförderer-Moduls 50 mit dem Vorläufer 28 und dem Nachläufer 30 insgesamt derart, dass die Förderrollen 54 nur mit einem geringen Abstand über der Tragschiene 16 verlaufen, wie es in den Figuren 2, 4 und 5 gut zu erkennen ist.

Eine durch die Förderrollen 54 vorgegebene Förderebene 66 ist nur in den Figuren 2 und 5 bezeichnet und in Figur 5 durch eine gestrichelte Linie veranschaulicht. Diese Förderebene 66 definiert die Transporthöhe oder besser die Auflagehöhe bezogen auf das Niveau des Bodens 14, bei welcher das Fördergut auf dem Rollenbahnförderer-Modul 50 aufliegt und von dem Tragbahnförderer 12 transportiert wird. Zugleich definiert die Förderebene 66 auch die Übergabehöhe bezogen auf das Niveau des Bodens 14, bei welcher Fördergut von dem Transportwagen 22 auf ein weiteres zur Förderanlage 10 gehörendes Fördersystem übergeben werden kann, das seinerseits nach einer anderen Art ausgebildet ist, als der Tragbahnförderer 12.

Durch die Rahmenstruktur 32, insbesondere durch die Bügeleinheiten 64, kann diese Transporthöhe 66 bzw. Übergabehöhe 66 besonders niedrig gehalten werden. In der Praxis haben sich Transporthöhen bzw. Übergabehöhen als besonders günstig erwiesen, die bezogen auf das Niveau des Bodens zwischen 250 mm und 1000 mm, bevorzugt zwischen 400 mm und 750 mm, nochmals bevorzugt zwischen 550 mm und 650 mm und besonders bevorzugt bei 550 mm angesiedelt sind. Dabei hat sich besonders eine Übergabehöhe von 550 mm bezogen auf das Bodenniveau als kompatibel zu vielen Arten von Fördersystemen herausgestellt.

Ein solches weiteres Fördersystem kann beispielsweise durch einen Rollenbahnförderer 68 gebildet sein, wie er an und für sich zum Fördern von Paletten bekannt ist und welcher vorliegend insbesondere komplementär zum Rollenbahnförderer-Modul 50 des Transportwagens 22 ist. Der Übersichtlichkeit halber ist der Rollenbahnförderer 68 lediglich in Figur 1 gezeigt, wo dieser auch nur stark schematisch veranschaulicht ist. Abweichend von dem Rollenbahnförderer 68 können aber auch andere bekannte Systeme, wie beispielsweise Tragkettenförderer bzw. vergleichbare Förderer, die mit Endlos-Antriebsmitteln arbeiten, oder dergleichen, mit dem Transportwagen 22 und dem von diesem mitgeführten Rollenbahnförderer-Modul 50 zusammenarbeiten. Zu Tragkettenförderern vergleichbare Förderer mit Endlos-Antriebsmitteln sind z.B. Bandförderer, Gurtförderer, Riemenförderer.

Beim vorliegenden Ausführungsbeispiel ist das Fördergut in einem Winkel von 90° zur Transportrichtung 24 gegenüber dem Fahrwerk 20 des Transportwagens 22 bewegbar. Bei nicht eigens gezeigten Abwandlungen kann der Winkel auch kleiner als 90° sein. Hierfür können beispielsweise die Bügeleinheiten 64 der Rahmenstruktur 32 so ausgebildet sein, dass die Seitenwangen 52 und damit die Rollenbahn 62 in einem anderem Winkel als 90° zu Transportrichtung 24 verlaufen. Grundsätzlich sind so alle Winkel kleiner als 90° möglich. Besonders geeignet ist neben 90° ein Winkel von 30°, 45° oder 60°.

Bei einer weiteren nicht eigens gezeigten Abwandlung kann die Rollenbahn 62 auch verdrehbar auf einem von den Bügeleinheiten 64 getragenen Lagerrahmen gelagert sein und mittels eines weiteren Elektromotors in verschiedene Winkelpositionen gegenüber der Transportrichtung gedreht und in diesen arretiert werden.

## Patentansprüche

1. Tragbahnförderer zum Fördern von Fördergut mit
a) einem einspurigen Schienensystem (18), welches wenigstens eine bodengebundene, einspurige Tragschiene (16) umfasst;
b) wenigstens einem in einer Transportrichtung (24) auf der einspurigen Tragschiene (16) verfahrbaren Transportwagen (22), welcher
ba) ein Fahrwerk (26) umfasst, dass eine in Transportrichtung (24) vorauseilende Fahreinheit (28) und eine in Transportrichtung (24) nacheilende Fahreinheit (30) aufweist, die durch eine Rahmenstruktur (32) verbunden und jeweils von der einspurigen Tragschiene (16) geführt sind;
bb) eine Trageinrichtung (46) für Fördergut umfasst;
bc) von einem Antriebsmotor (34) antreibbar ist, der von dem Fahrwerk (26) mitgeführt wird,
**dadurch gekennzeichnet, dass**
c) die Rahmenstruktur (32) des Fahrwerks (26) die Trageinrichtung (46) bildet und ihrerseits als Fördereinrichtung (48) ausgebildet ist, durch welche Fördergut relativ zu dem Fahrwerk (26) des Transportwagens (22) und in einem Winkel zur Transportrichtung (24) bewegbar ist.

2. Tragbahnförderer nach Anspruch 1, **dadurch gekennzeichnet, dass** die Fördereinrichtung (48) nach einer anderen Art ausgebildet ist, als der Tragbahnförderer (12).

3. Tragbahnförderer nach Anspruch 1 oder 2, **dadurch gekennzeichnet, dass** die Fördereinrichtung (48) nach Art eines Rollenbahnförderers oder eines Tragkettenförderers ausgebildet ist.

4. Tragbahnförderer nach einem der Ansprüche 1 bis 3, **dadurch gekennzeichnet, dass** die Rahmenstruktur (32) derart ausgebildet ist, dass die Transporthöhe (66) für das Fördergut bezogen auf das Niveau des Bodens (14) zwischen 250 mm und 1000 mm, bevorzugt zwischen 400 mm und 750 mm, nochmals bevorzugt zwischen 550 mm und 650 mm und besonders bevorzugt bei 550 mm angesiedelt ist.

5. Tragbahnförderer nach einem der Ansprüche 1 bis 4, **dadurch gekennzeichnet, dass** der Winkel, in welchem Fördergut zur Transportrichtung (24) gegenüber dem Fahrwerk (26) des Transportwagens (22) bewegbar ist, bis zu 90° beträgt.

6. Tragbahnförderer nach Anspruch 5, **dadurch gekennzeichnet, dass** der Winkel, in welchem Fördergut zur Transportrichtung (24) gegenüber dem Fahrwerk (26) des Transportwagens (22) bewegbar ist, 30° oder 45° oder 60° oder 900 beiträgt.

7. Tragbahnförderer nach einem der Ansprüche 1 bis 6, **dadurch gekennzeichnet, dass** als Fördergut beladene Paletten förderbar sind.

8. Förderanlage zum Fördern von Fördergut, welche einen Tragbahnförderer (12) und wenigstens ein weiteres Fördersystem umfasst, **dadurch gekennzeichnet, dass** der Tragbahnförderer (12) nach einem der Ansprüche 1 bis 7 ausgebildet ist.

## Claims

1. Supporting rail conveyor for conveying material to be conveyed, comprising:
a) a single-line rail system (18) which comprises at least one floor-based, single-line carrying rail (16);
b) at least one transport car (22) which is movable in a transport direction (24) on the single-line carrying rail (16), which
ba) comprises a carriage (26) having a travel unit (28), which leads in the transport direction (24), and a travel unit (30), which follows in the transport direction (24), which are connected by a frame structure (32) and are each guided by the single-line carrying rail (16);
bb) comprises a carrying device (46) for material to be conveyed;
bc) is drivable by a driving motor (34) which is carried by the carriage (26),
**characterized in that**
c) the frame structure (32) of the carriage (26) forms the carrying device (46) and is constructed as a conveyor device (48) by means of which the material to be conveyed is movable relative to the carriage (26) of the transport car (22) and at an angle to the transport direction (24).

2. Supporting rail conveyor according to claim 1, **characterized in that** the conveyor device (48) is constructed in a different manner then the Supporting rail conveyor (12).

3. Supporting rail conveyor according to claim 1 or 2, **characterized in that** the conveyor device (48) is constructed in the manner of a roller conveyor or a carrying-chain conveyor.

4. Supporting rail conveyor according to one of the claims 1 to 3, **characterized in that** the frame structure (32) is constructed such that the transport height (66) for the material to be conveyed in relation to the level of the floor (14) is between 250 mm and 1000 mm, preferably between 400 mm and 750 mm, more preferably between 550 mm and 650 mm and particularly preferably at 550 mm.

5. Supporting rail conveyor according to one of the claims 1 to 4, **characterized in that** the angle to the transport direction (24) at which material to be conveyed is movable relative to the carriage (26) of the transport car (22) is up to 90°.

6. Supporting rail conveyor according to claim 5, **characterized in that** the angle to the transport direction (24) at which material to be conveyed is movable relative to the carriage (26) of the transport car (22) is 30° or 45° or 60° or 90°.

7. Supporting rail conveyor according to one of the claims 1 to 6, **characterized in that** loaded pallets are conveyable as a material to be conveyed.

8. Conveyor arrangement for conveying material to be conveyed, comprising a supporting rail conveyor (12) and at least one further conveyor system **characterized in that** the supporting rail conveyor (12) is constructed according to one of the claims 1 to 7.

## Revendications

1. Convoyeur à voie porteuse pour le transport de marchandises à transporter, avec
a) un système de rail (18) à voie unique, qui comprend au moins un rail porteur (16) à voie unique, lié au sol ;
b) au moins un chariot de transport (22), qui peut être déplacé dans une direction de transport (24) sur le rail porteur (16) à voie unique et qui
ba) comprend un mécanisme de roulement (26) qui présente une unité de roulement (28) antérieure dans la direction de transport (24) et une unité de roulement (30) postérieure dans la direction de transport (24), qui sont reliées par une structure de châssis (32) et sont respectivement guidées par le rail porteur (16) à voie unique ;
bb) comprend un dispositif porteur (46) pour les marchandises à transporter ;
bc) peut être entraîné par un moteur d'entraînement (34) qui est embarqué par le mécanisme de roulement (26) ;
**caractérisé en ce que**
c) la structure de châssis (32) du mécanisme de roulement (26) forme le dispositif porteur (46) et est elle-même réalisée sous forme de convoyeur (48) par lequel les marchandises à transporter peuvent être déplacées par rapport au mécanisme de roulement (26) du chariot de transport (22) et sous un angle par rapport à la direction de transport (24).

2. Convoyeur à voie porteuse selon la revendication 1, **caractérisé en ce que** le convoyeur (48) est réalisé d'une autre matière que le convoyeur à voie porteuse (12).

3. Convoyeur à voie porteuse selon la revendication 1 ou 2, **caractérisé en ce que** le convoyeur (48) est réalisé à la manière d'un convoyeur à rouleaux ou d'un convoyeur à chaîne porteuse.

4. Convoyeur à voie porteuse selon l'une des revendications 1 à 3, **caractérisé en ce que** la structure de châssis (32) est configurée de telle sorte que la hauteur de transport (66) pour les marchandises à transporter se situe, par rapport au niveau du sol (14), entre 250 mm et 1000 mm, de préférence entre 400 mm et 750 mm, d'une manière encore plus préférée entre 550 mm et 650 mm et d'une manière particulièrement préférée à 550 mm.

5. Convoyeur à voie porteuse selon l'une des revendications 1 à 4, **caractérisé en ce que** l'angle par rapport à la direction de transport (24) sous lequel les marchandises à transporter peuvent être déplacées par rapport au mécanisme de roulement (26) du chariot de transport (22) est égal à jusqu'à 90°.

6. Convoyeur à voie porteuse selon la revendication 5, **caractérisé en ce que** l'angle par rapport à la direction de transport (24) sous lequel les marchandises à transporter peuvent être déplacées par rapport au mécanisme de roulement (26) du chariot de transport (22) est égal à 30° ou 45° ou 60° ou 90°.

7. Convoyeur à voie porteuse selon l'une des revendications 1 à 6, **caractérisé en ce que** des palettes chargées peuvent être transportées comme marchandises à transporter.

8. Installation de transport pour le transport de marchandises à transporter, qui comprend un convoyeur à voie porteuse (12) et au moins un autre système de convoyage, **caractérisée en ce que** le convoyeur à voie porteuse (12) est configuré selon l'une des revendications 1 à 7.
